# DEMANDE DE BREVET EUROPEEN

(11) **EP 0 616 415 A1**
(43) Date de publication de la demande: **21.09.1994**
(21) Numéro de dépôt: 94400529.7
(22) Date de dépôt: 10.03.1994
(51) Int. Cl.: H02M 7/48

(54) **Dispositif de commande du circuit oscillant d'un onduleur de tension fonctionnant en quasi-résonance à régulation à modulation de largeur d'impulsion**

(30) Priorité: 13.03.1993 FR 9302898
(71) Demandeur: ELECTRICITE DE FRANCE Service National, F-75008 Paris (FR)
(72) Inventeur: Pouliquen, Hervé, F-92140 Clamart (FR); Elloumi, Khaled, F-92140 Clamart (FR)
(74) Mandataire: Obolensky, Michel

(57) **Abrégé**

Onduleur de tension quasi-résonant à modulation de largeur d'impulsion, comportant un pont (2) et un circuit oscillant constitué d'une inductance (5) en série avec la source de tension (1) et d'un condensateur (6) en parallèle sur le pont (2), la période d'échantillonnage était très supérieure à la période de résonance, caractérisé en ce qu'il comporte un composant commandé fonctionnant en bloqué-saturé (7) en parallèle sur le condensateur (6) et un capteur de tension (8) parallèle sur le condensateur (6), le composant (7) étant commandé par le capteur (8) de manière à mettre le condensateur (6) en court-circuit lorsque la tension aux bornes de ce dernier est nulle et à valider les transitions du signal de commande de la régulation à modulation de largeur d'impulsion.

## Description

L'invention concerne les onduleurs de tension qui fonctionnent en quasi-résonance et qui comportent une régulation à modulation de largeur d'impulsion.

De tels onduleurs sont décrits dans la demande de brevet français déposée le 26 août 1991 pour "Procédé de régulation d'un onduleur de tension fonctionnant en quasi-résonance" sous le numéro 91 10 607. Cette demande de brevet a pour objet un procédé de régulation d'un onduleur de tension fonctionnant en quasi-résonance, comportant un pont monophasé ou polyphasé à composants commandés fonctionnant en bloqué-saturé et un circuit oscillant disposé du côté de la tension continue et constitué d'une inductance en série avec la source de tension et d'un condensateur branché en parallèle sur le pont à composants commandés, dans lequel on réalise la régulation à modulation de largeur d'impulsion dont la période d'échantillonnage est très supérieure à la période de résonance du circuit oscillant.

Selon ce procédé, les impulsions de commande à modulation de largeur d'impulsion sont formées de séries d'arches de sinusoïde et les transitions de commande doivent être effectuées à des instants discrets qui sont les passages par zéro de ces arches.

Ce procédé permet de séparer la fonction de maintien, par des moyens analogiques, à haute fréquence des courts-circuits nécessaires à l'entretien de l'oscillation, de la fonction de régulation proprement dite de la charge de l'onduleur. Ceci permet d'utiliser des régulateurs numériques fonctionnant à des fréquences plus faibles que la fréquence de résonance et qui peuvent prendre en compte les caractéristiques de la charge.

Ce procédé permet donc d'associer les avantages propres à la résonance à haute fréquence, à savoir la réduction de volume et le rendement et ceux des commandes numériques, à savoir souplesse de traitement, adaptabilité et optimisation.

On peut envisager des applications de forte puissance. Plus on monte en puissance, plus la fréquence de commutation des composants commandés est faible à cause des pertes de commutation.

La présente invention propose donc de ne pas assurer le maintien des courts-circuits par les composants commandés du pont. En accord avec le procédé connu précédent, il faut alors découpler, au niveau de la structure du convertisseur, ce qui est lié à l'entretien de l'oscillation de ce qui est lié au contrôle de la charge. Ainsi l'oscillation peut être à fréquence élevée.

La présente invention a donc pour objet un onduleur de tension fonctionnant en quasi-résonance à régulation à modulation de largeur d'impulsion, comportant un pont monophasé ou polyphasé à composants commandés fonctionnant en bloqué-saturé et un circuit oscillant disposé du côté tension continue et constitué d'une inductance en série avec la source de tension continue et d'un condensateur branché en parallèle sur le pont à composants commandés, dans lequel on réalise une régulation à modulation de largeur d'impulsion dont la période d'échantillonnage est très supérieure à la période de résonance du circuit oscillant, caractérisé en ce qu'il comporte un élément de commutation pour entretenir la résonance constitué par le branchement en série de composants commandés fonctionnant en bloqué-saturé et branché en parallèle sur le condensateur du circuit oscillant et un capteur de tension branché en parallèle sur le condensateur du circuit oscillant, ledit élément de commutation de la résonance étant commandé par ledit capteur de tension de manière à mettre le condensateur du circuit oscillant en court-circuit lorsque la tension aux bornes de ce dernier est nulle et à valider les transitions du signal de commande de la régulation à modulation de largeur d'impulsion.

L'élément de commutation branché en parallèle sur le condensateur du circuit oscillant permet d'entretenir la résonance et provoque les courts-circuits successifs sur la capacité du circuit oscillant à la fréquence de résonance. Le pont à composants commandés fonctionne à une fréquence de commutation qui est très inférieure à la fréquence de résonance.

Ceci permet d'obtenir un élément de commutation rapide dont les temps de commutation sont courts, tout en tenant compte des contraintes de dimensionnement en courant et en tension.

La série de composants commandés peut être constituée par des transistors bipolaires, en particulier des transistors bipolaires à grille isolée ou par des transistors MOS.

Selon une autre caractéristique de l'invention, l'onduleur comporte un écrêteur branché en parallèle sur le condensateur du circuit oscillant, ledit écrêteur limitant la tension aux bornes du condensateur du circuit oscillant à une tension de seuil.

Ce dispositif d'écrêtage permet d'éviter les surtensions dans le circuit oscillant provoquées par la commutation du pont à composants commandés.

Par ailleurs, il permet de limiter la tension que doit supporter l'élément de commutation.

Selon un mode de réalisation, cet écrêteur est constitué par un circuit série constitué d'un condensateur d'écrêtage et d'un interrupteur commandé constitué par un composant commandé fonctionnant en bloqué-saturé muni d'une diode en antiparallèle, ledit circuit série étant branché en parallèle sur l'inductance du circuit oscillant, l'interrupteur commandé étant commandé par le capteur de tension branché aux bornes du condensateur du circuit oscillant de manière à mettre ledit condensateur d'écrêtage en court-circuit lorsque le capteur détecte une tension supérieure à la tension de seuil.

Selon encore une autre caractéristique de l'invention, l'onduleur comporte, en plus des diodes branchées classiquement en antiparallèle sur les composants commandés du pont, une diode branchée en antiparallèle sur le condensateur du circuit oscillant.

Cette diode permet d'absorber, lors des commutations du pont à composants commandés, les courants de valeurs négatives dont la valeur maximale est égale à environ deux fois le courant de charge. Ceci permet également de ne pas surdimensionner les diodes qui sont montées en antiparallèle sur les composants commandés du pont.

D'autres caractéristiques et avantages de l'invention ressortiront de la description qui suit, faite en se référant aux dessins annexés sur lesquels :
- la figure 1 est le schéma d'un onduleur selon la présente invention ;
- la figure 2 montre un exemple de réalisation de l'élément de commutation chargé d'entretenir la résonance ;
- la figure 3 est un diagramme illustrant le principe de la commande par modulation de largeur d'impulsion du pont ; et
- la figure 4 est un schéma de réalisation de l'invention.

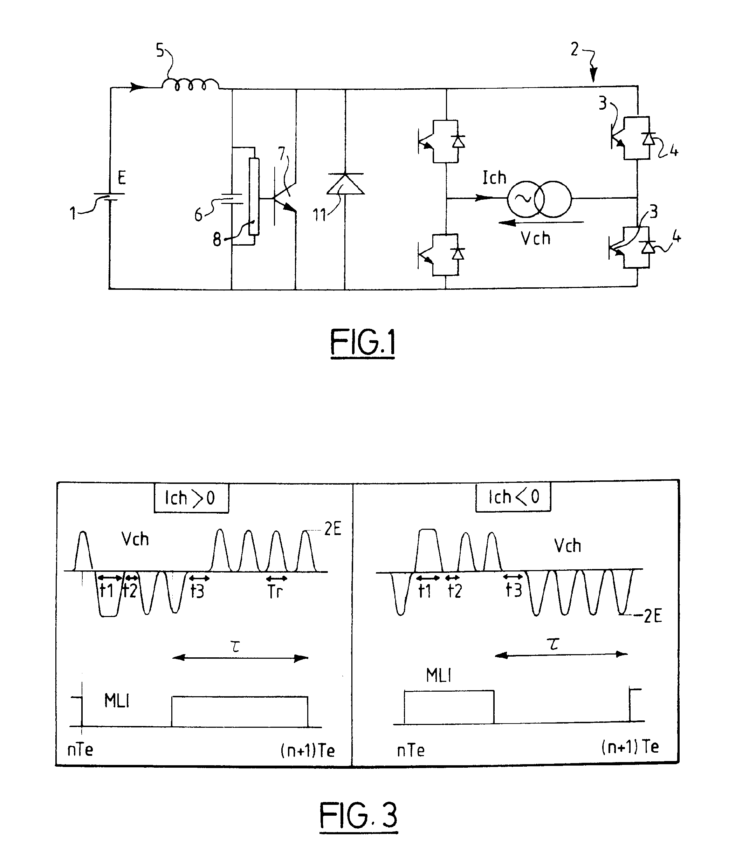

La figure 1 est le schéma d'un onduleur de tension fonctionnant en quasi-résonance à régulation à modulation de largeur d'impulsion. Une source de tension continue 1, de tension E, alimente un pont 2 à composants commandés 3 fonctionnant en bloqué-saturé, c'est-à-dire à amorçage et extinction commandés ; une diode de roue libre 4 est disposée en antiparallèle sur chacun des composants commandés 3 du pont 2.

Le fonctionnement en quasi-résonance est obtenu grâce à un circuit oscillant disposé du côté tension continue ; il est constitué d'une inductance 5 en série avec la source de tension continue 1 et d'un condensateur 6 en parallèle sur le pont 2.

La régulation du courant alternatif fourni par l'onduleur est réalisée par un procédé de modulation de largeur d'impulsion classique dont la période d'échantillonnage régulière Te est très supérieure à la période du circuit oscillant constitué par l'inductance 5 et le condensateur 6.

Conformément à l'invention, on branche en parallèle sur le condensateur 6 un élément de commutation 7 fonctionnant en bloqué-saturé et un capteur 8 de tension qui commande l'élément de commutation 7. Le capteur de courant 8 commande l'amorçage de l'élément de commutation 7 lorsqu'il détecte une tension nulle aux bornes du condensateur 6. De cette manière, on entretient l'oscillation du circuit oscillant. La fréquence de résonance de ce circuit oscillant est nettement plus élevée que la fréquence de commande du pont 2 qui est commandé par une régulation à modulation de largeur d'impulsion réalisée de préférence par un circuit numérique.

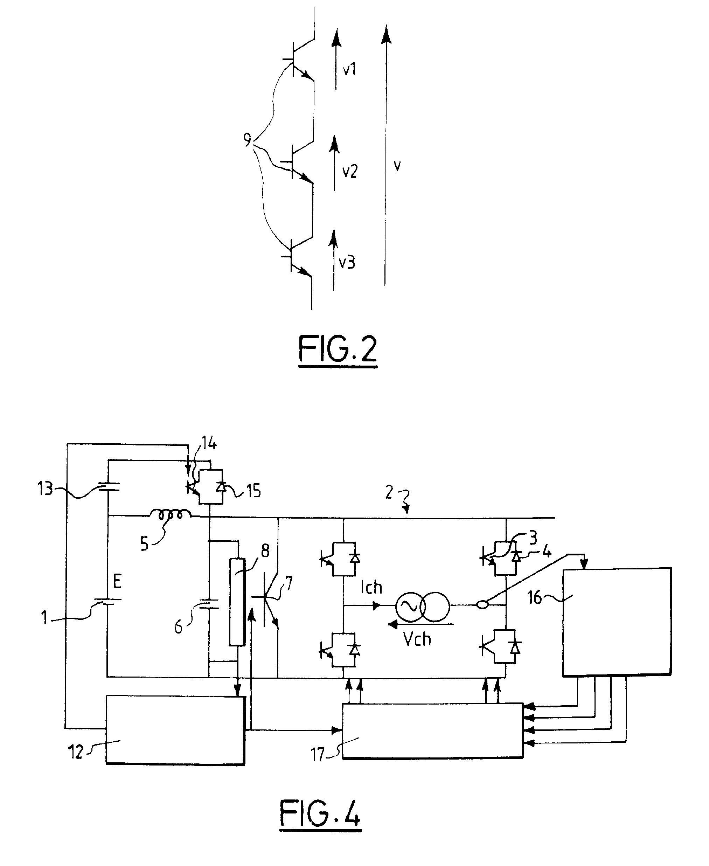

Avantageusement, comme représenté sur la figure 2, l'élément de commutation est constitué par une série de composants commandés fonctionnant en bloqué-saturé 9. Ces éléments sont des composants rapides présentant des temps de commutation courts.

On peut par exemple utiliserdes transistors bipolaires, des transistors bipolaires à grille isolée (IGBT) ou des transistors de type MOS.

Cet élément de commutation ne présente pas du tout les mêmes caractéristiques et performances que les composants commandés constituant le pont de l'onduleur.

Sur la figure 1, on a représenté en 11 un élément diode monté en antiparallèle sur l'élément de commutation 7. Cette diode est avantageusement constituée par l'association de plusieurs diodes branchées en parallèle dans la mesure où elle doit absorber un courant d'environ deux fois le courant de charge.

En effet, le courant amené à circuler dans l'élément de commutation 7 est positif et négatif. Lorsqu'il est positif, ce courant circule dans l'élément de commutation. La valeur maximale positive de ce courant est égale à la différence entre le courant traversant l'inductance 5 et le courant à l'entrée du pont commandé, au moment des courts-circuits. Cette valeur est alors très faible.

La valeur maximale négative du courant vaut au maximum environ deux fois le courant de charge Ich. Cette valeur est très élevée lorsque le courant de charge Ich est maximal.

En l'absence de cet élément diode 11, lorsque le courant est négatif, il peut simplement circuler dans les diodes 4 branchées en antiparallèle sur les composants commandés 3. Par suite, la contrainte de surdimensionnement, causée par le courant négatif se trouve reportée sur les diodes 4 du pont à composants commandés.

La figure 3 représente le diagramme de la commande d'un onduleurquasi-résonant à régulation par modulation de largeur d'impulsion. Les impulsions de modulation de largeur d'impulsion sont formées de séries d'arches de sinusoïde et les transitions de commande doivent être effectuées à des instants discrets qui sont les passages par zéro de ces arches. Il apparaît ainsi une incertitude de l'ordre de la période de résonance au niveau de la définition de l'impulsion de modulation de largeur d'impulsion.

Une autre contrainte importante provient de la déformation de l'onde de tension lors des commutations. On observe ainsi, suivant le signe du courant de charge et le sens de la transition de commande, des surtensions (écrêtées) et des retards dus à des charges linéaires du courant dans l'inductance 5.

Sur la figure 3, Ich représente le courant de charge, Vch la tension aux bornes de la charge, Te la période d'échantillonnage de la commande en modulation de largeur d'impulsion et la largeur de l'impulsion de modulation de largeur d'impulsion.

La commande est complètement symétrique, dans la mesure où, pour un courant de charge positif, l'impulsion τ correspond à la commande +E alors que pour un courant de charge négatif, l'impulsion τ correspond à une commande -E. Dans ces deux cas, l'impulsion, positive ou négative, est calée à droite. Si l'on réalise un écrêtage comme indiqué dans la demande de brevet français précitée, ce phénomène se situe au début de la période. Sa prise en compte est donc précise, puisque, à ce moment, on mesure le courant de charge Ich dont dépendent les variations des différents temps de commutation t1 à t3.

On observe que l'utilisation de l'élément de commutation selon la présente invention réalisant une commutation à une fréquence nettement plus élevée que si l'on utilisait les interrupteurs du pont de l'onduleur apporte les avantages suivant. Tout d'abord, on peut réduire la durée de la période de résonance. Par ailleurs, on peut réduire les temps de commutation t1 à t3. Par conséquent, on réduit les incertitudes de commande, ce qui entraîne une amélioration de la qualité du contrôle de la charge.

La figure 4 est le schéma d'un exemple de réalisation dans lequel le pont 2 comporte des transistors bipolaires à grille isolée (IGBT) et la fréquence du circuit oscillant est de 20 kHz.

Cet onduleur comporte un dispositif d'écrêtage actif associé au circuit oscillant. Il est constitué par le capteur de tension 8 dont le signal de sortie est envoyé à un circuit 12 de commande de l'élément de commutation 7 et du circuit d'écrêtage.

Ce dernier comprend un circuit série constitué d'un condensateur 13 et d'un composant commandé fonctionnant en bloqué-saturé 14 muni d'une diode en antiparallèle 15 ; ce circuit série est branché en parallèle sur l'inductance 5.

Le circuit de commande 12 commande l'amorçage de l'élément de commutation 7 lorsque le capteur 8 indique que la tension aux bornes du condensateur 6 est nulle puis le blocage de cet élément de commutation à la fin de la durée du court-circuit nécessaire à l'entretien de l'oscillation. Par ailleurs, ce circuit 12 fournit également l'ordre d'amorçage du composant commandé 14 lorsque la tension fournie par le capteur 8 est supérieure à une valeur de seuil. Au début, lorsque la tension dépasse la valeur du seuil, c'est la diode 15 qui conduit. Au blocage de la diode 15, le composant commandé 14 devient conducteur et décharge le condensateur 13. Le circuit 12 fournit l'ordre de blocage du composant commandé 14 lorsque la tension aux bornes du condensateur 6 rejoint la valeur seuil.

On a également représenté sur cette figure un microprocesseur 16 qui commande les composants commandés 3 du pont 2 par l'intermédiaire d'un synchroniseur 17, la régulation se faisant en fonction de la valeur du courant de charge Ich. Le synchroniseur 17 reçoit également une commande du circuit 12 pour la synchronisation des instants de passage par zéro de la tension aux bornes du condensateur 6 et des transitions de la commande à modulation de largeur d'impulsion.

On voit que l'invention permet de découpler complètement l'entretien de l'oscillation du circuit oscillant de la commande du pont 2 alimentant la charge 8. Ceci permet de ne pas assurer le maintien des courts-circuits du condensateur 6 par les composants commandés du pont 2 qui sont dimensionnés pour les contraintes de la charge. Dans le cas d'un pont à composants commandés de forte puissance, il est possible d'utiliser des composants peu rapides puisque la fréquence de la régulation à modulation de largeur d'impulsion est beaucoup plus faible que la fréquence d'oscillation du circuit oscillant.

L'utilisation du capteur de tension 8 et du circuit d'écrêtage permet également de limiter le dimensionnement des différents composants commandés de l'onduleur.

## Revendications

1. Onduleur de tension fonctionnant en quasi-résonance à régulation à modulation de largeur d'impulsion, comportant un pont (2) monophasé ou polyphasé à composants commandés (3) fonctionnant en bloqué-saturé et un circuit oscillant disposé du côté tension continue et constitué d'une inductance (5) en série avec la source de tension continue (1) et d'un condensateur (6) branché en parallèle sur le pont (2) à composants commandés, dans lequel on réalise une régulation à modulation de largeur d'impulsion dont la période d'échantillonnage est très supérieure à la période de résonance du circuit oscillant, caractérisé en ce qu'il comporte un élément de commutation (7) pour entretenir la résonance constitué par le branchement en série de composants commandés (9) fonctionnant en bloqué-saturé et branché en parallèle sur le condensateur (6) du circuit oscillant et un capteur de tension (8) branché en parallèle sur le condensateur (6) du circuit oscillant, ledit élément de commutation (7) de la résonance étant commandé par ledit capteur de tension (8) de manière à mettre le condensateur (6) du circuit oscillant en court-circuit lorsque la tension aux bornes de ce dernier est nulle et à valider les transitions du signal de commande de la régulation à modulation de largeur d'impulsion.

2. Onduleur de tension fonctionnant en quasi-résonance selon la revendication 1, caractérisé en ce que la série de composants commandés (9) est constituée par des transistors bipolaires.

3. Onduleur de tension fonctionnant en quasi-résonance selon la revendication 1, caractérisé en ce que la série de composants commandés (9) est constituée de transistors bipolaires à grille isolée.

4. Onduleur de tension fonctionnant en quasi-résonance selon la revendication 2, caractérisé en ce que la série de composants commandés (9) est constituée de transistors MOS.

5. Onduleur de tension fonctionnant en quasi-résonance selon la revendication 1, caractérisé en ce qu'il comporte un écrêteur (8,12-15) branché en parallèle sur le condensateur (6) du circuit oscillant, ledit écrêteur limitant la tension aux bornes du condensateur du circuit oscillant à une tension de seuil.

6. Onduleur de tension fonctionnant en quasi-résonance selon la revendication 5, caractérisé en ce que ledit écrêteur est constitué par un circuit série constitué d'un condensateur d'écrêtage (13) et d'un interrupteur commandé (14) constitué par un composant commandé fonctionnant en bloqué-saturé et muni d'une diode en anti-parallèle (15), ledit circuit série étant branché en parallèle sur l'inductance (5) du circuit oscillant, l'interrupteur commandé (14) étant commandé par le capteur de tension (8) branché aux bornes du condensateur (6) du circuit oscillant de manière à mettre ledit condensateur d'écrêtage (13) en parallèle sur l'inductance (5) lorsque le capteur détecte une tension supérieure à la tension de seuil.

7. Onduleur de tension fonctionnant en quasi-résonance selon la revendication 1, caractérisé en ce qu'il comporte un élément diode (11) constitué par des diodes en parallèle et branché en antiparallèle sur le composant commandé (7) chargé de l'entretien de la résonance (6) du circuit oscillant.
